# EUROPEAN PATENT APPLICATION

(11) **EP 2 833 301 A1**
(43) Date of publication of application: **04.02.2015**
(21) Application number: 13290181.0
(22) Date of filing: 01.08.2013
(51) Int. Cl.: G06Q 10/02, G06Q 50/14

(54) **Contract number allocation for travel industry transactions**

(71) Applicant: Amadeus S.A.S., 06410 Biot (FR)
(72) Inventor: Gevrey, Julien, 06700 St Laurent du Var (FR); Cassan-Barnel, Damien, 06110 Le Cannet (FR); Lapierre, Anthony, 06160 Juan les Pins (FR); Le Marier, Mathieu, 06600 Antibes (FR); Ba, Karimou, 06000 Nice (FR)
(74) Representative: Samson & Partner

(57) **Abstract**

Methods, systems, and computer program products for defining subcategories and associated contract number ranges within a standard issuance context category for a travel product. A stock allocation module includes a stock index table having a plurality of stock indexes each associated with an issuance context and at least one range of numbers. In response to a traveler purchasing a travel product, an issuance platform sends an allocation request to the stock allocation module. In response to receiving the allocation request, the stock allocation module identifies a stock index matching the issuance context of the pending transaction. The matching stock index is then used to identify the range of numbers corresponding to the issuance context. An available number is selected from the identified range of contract numbers and used to define a contract number. The contract number is then returned to the issuance platform.

## Description

### BACKGROUND

The invention generally relates to computers and computer software, and in particular to methods, systems, and computer program products for assigning a contract number from a range of contract numbers based on an issuance context of the contract.

In the travel industry, travelers typically purchase travel products, such as a right to travel on an airline or railway carrier, by purchasing a ticket. A ticket is a document issued by the carrier, a travel agency, or other authorized seller that confirms the traveler has purchased a good or service from the carrier. In the case of an airline, the ticket may confirm that the traveler has purchased a seat on one or more flights scheduled to travel from an origination point to a destination point. The seat may be for a specific time, or may be redeemable for a future time period at the discretion of the traveler. In either case, the ticket is typically used to obtain a boarding pass from the transporting carrier prior to departure. The most common type of ticket is known as an electronic ticket, or "e-ticket", although tickets redeemable for travel products may also be issued as coupons. Tickets issued as coupons are commonly referred to as "paper tickets". A ticket for travel provided via a rail carrier may also be referred to as a travel card or transit pass. In any case, the ticket thereby confirms the existence of a contract between the traveler and the carrier representing a promise by the carrier to provide the traveler with transport in exchange for a payment from the traveler.

Travelers may purchase various types of tickets. For example, some types of tickets are only good for flights provided by the specific airline for which the ticket was purchased. However, the airline may endorse this type of ticket so that the ticket will also be accepted by other airlines. A ticket may only be redeemable for a specific flight, or the ticket may be an "open" ticket that allows travel on any flight between the origination and destination listed on the ticket. Some types of tickets may be refundable, while others may be non-refundable. Tickets may also specify that the traveler is entitled to an additional service, such as a meal or access to a airport lounge. Thus, many types of tickets are sold, with each type having different sets of restrictions and/or entitling the traveler to a different product. As may be expected, travelers will typically pay a higher fare for tickets having fewer restrictions or that provide additional services. Thus, travelers willing to accept a greater number of restrictions, such as with regard allowable dates of travel, the ability to transfer to another flight, or the ability to obtain a refund on the ticket, can typically purchase ticket for less money than a traveler requiring greater flexibility or a higher level of service.

In order to identify the ticket in various computer systems associated with billing and passenger processing, a contract number is assigned as part the process of issuing the ticket. When a ticket is issued in the airline transpiration industry, a unique contract number may be generated by a computer and assigned to the ticket. This contract number may include a form code that comprises 2 or 3 digits of the contract number. Each form code may be associated with one of a plurality of standard categories of transportation products that are defined by the International Air Transport Association (IATA). A "stock provider" number that identifies the validating carrier may also be included in the contract number. The contract number for a ticket issued for air travel may therefore consist of the airline code and form code followed by a serial number and, in some cases, a check digit. Form codes thereby provide a plurality of contract number ranges that define standard categories of airline tickets. Contract numbers that are issued in compliance with these standard ranges allow the airline and/or Billing and Settlement Plan (BSP) system to determine if a ticket is in one of these standard categories. However, because the standard categories are industry standard categories defined by the IATA, the standard categories are the same for each carrier. Carriers are thus limited to the standard category classifications defined by the IATA, which limits each airline's ability to define additional categories of tickets that address their specific needs.

Thus, improved systems, methods, and computer program products for defining and assigning contract numbers are needed that enable carriers to define contract number ranges that identify contracts as including a particular set of product characteristics unique to that carrier, but that maintain compatibility with existing industry standards.

### BRIEF SUMMARY

In an embodiment of the invention, a method of organizing contract numbers in a database is provided. The database includes a plurality of sets of contract numbers, each set of contract numbers corresponding to one of a plurality of stock providers and including a plurality of standard category number ranges. The method includes defining, for a set of contract numbers corresponding to a stock provider, a first subcategory number range within a standard category number range and corresponding to a first issuance context. The method further includes defining, for the set of contract numbers, a second subcategory number range within the standard category number range and corresponding to a second issuance context. A first contract issued for the stock provider having a first contract number including a first number from the first subcategory number range is thereby identifiable as having the first issuance context based on the first contract number. In addition, a second contract issued for the stock provider that has a second contract number including a second number from the second subcategory number range is identifiable as having the second issuance context based on the second contract number.

In another embodiment of the invention, an apparatus is provided. The apparatus includes a processor and a memory including instructions. The instructions are configured so that, when executed by the processor, they cause the apparatus to define the first subcategory number range within the standard category number range. The first subcategory range is thereby defined for the set of contract numbers, and corresponds to the first issuance context. The instructions further cause the processor to define the second subcategory number range within the standard category number range. The second subcategory range is thereby defined for the set of contract numbers, and corresponds to the second issuance context. The first contract issued for the stock provider having the first contract number including the first number from the first subcategory number range is thereby identifiable as having the first issuance context based on the first contract number. In addition, the second contract issued for the stock provider having the second contract number including the second number from the second subcategory number range is identifiable as having the second issuance context based on the second contract number.

In another embodiment of the invention, a computer program product is provided. The computer program product includes a non-transitory computer readable storage medium that stores instructions. The instructions are configured so that, when executed by a processor, they cause the processor to define the first subcategory number range within the standard category number range. The first subcategory range is thereby defined for the set of contract numbers, and corresponds to the first issuance context. The instructions further cause the processor to define the second subcategory number range within the standard category number range. The second subcategory range is thereby defined for the set of contract numbers, and corresponds to the second issuance context. The first contract issued for the stock provider having the first contract number including the first number from the first subcategory number range is thereby identifiable as having the first issuance context based on the first contract number. In addition, the second contract issued for the stock provider having the second contract number including the second number from the second subcategory number range is identifiable as having the second issuance context based on the second contract number.

In another embodiment of the invention, a method of assigning contract numbers from a database of contract numbers is provided. The method includes receiving, at the computer, an allocation request from an issuance platform, the allocation request being for a contract issued for the stock provider and including the issuance context. The method further includes determining, at the computer, a stock index that matches the issuance context. The method defines a contract number that includes a number from the first subcategory number range associated with the stock index in the database, and transmits the contract number to the issuance platform. The first subcategory number range defines a portion of the standard category number range stored in the database, which may store the plurality of standard category number ranges. The standard category number range includes the first subcategory number range and the second subcategory number range, each of the first and second subcategory number ranges being associated with the stock provider.

In another embodiment of the invention, another apparatus is provided. The apparatus includes the processor and the memory including instructions. The instructions are configured so that, when executed by the processor, they cause the apparatus to receive the allocation request from the issuance platform. The allocation request may be for the contract issued for the stock provider and includes the issuance context. The instructions may further cause the processor to determine the stock index that matches the issuance context, and define the contract number. The contract number may include the number from the first subcategory number range associated with the stock index in the database, and may be transmitted to the issuance platform. The first subcategory number range may define the portion of the standard category number range stored in the database. The standard category number range may further include the first subcategory number range and the second subcategory number range, each of the first and second subcategory number ranges being associated with the stock provider. The first standard category number range may be one of the plurality of standard category number ranges stored in the database.

In another embodiment of the invention, another computer program product is provided. The computer program product includes the non-transitory computer readable storage medium that stores instructions. The instructions are configured so that, when executed by the processor, they cause the processor to receive the allocation request from the issuance platform. The allocation request may be for the contract issued for the stock provider and includes the issuance context. The instructions may further cause the processor to determine the stock index that matches the issuance context, and define the contract number. The contract number may include the number from the first subcategory number range associated with the stock index in the database, and may be transmitted to the issuance platform. The first subcategory number range may define the portion of the standard category number range stored in the database. The standard category number range may further include the first subcategory number range and the second subcategory number range, each of the first and second subcategory number ranges being associated with the stock provider. The first standard category number range may be one of the plurality of standard category number ranges stored in the database.

### BRIEF DESCRIPTION OF THE SEVERAL VIEWS OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.

FIG. 1 is a diagrammatic view of an exemplary operating environment including a plurality of computer systems in communication via a network.

FIG. 2 is a diagrammatic view of an exemplary computer system of FIG. 1.

FIG. 3 is a diagrammatic view of an exemplary contract number depicting the structure of the contract number.

FIG. 4 is a diagrammatic view of a plurality of standard categories and associated subcategories, each of the standard categories and subcategories being associated with a range of contract numbers.

FIG. 5 is a diagrammatic view of a contract number allocation system including a stock allocation module having a stock index table and a stock database.

FIG. 6 is a diagrammatic view of an exemplary portion of the stock index table of FIG. 5.

FIG. 7 is a diagrammatic view of an exemplary portion of the stock database of FIG. 5.

FIG. 8 is a flow diagram depicting a process for allocating a contract number to a pending transaction.

FIG. 9 is a diagrammatic view of an exemplary portion of a stock database having four stock index entries.

FIG. 10 is a diagrammatic view of table depicting parameter matches between the issuance context of a pending transaction and the stock indexes of FIG. 9

FIG. 11 is a flow diagram depicting a process for defining a new stock index in the stock index table and associating the stock index with a contract number range in the stock database of FIG. 5.

### DETAILED DESCRIPTION

Embodiments of the invention may be implemented by a processing and database system, such as a Global Distribution System (GDS), to provide a flexible way of allocating contract numbers based on one or more sets of parameters that define an issuance context of a contract. Airline, railway, and other stock providers may thereby issue contracts having contract numbers that are encoded with information relating to issuance parameters of the contract. These issuance parameters may include a type of the stock provider, an identity of the stock provider, a type of contract being issued, a contract media type, a user type (e.g., travel agency, Central Ticketing Office (CTO), Airline Ticketing Office (ATO), etc.), a point of issuance of the contract, and/or a contract nature (e.g., domestic or international). This encoded information may enable billing systems to use revenue accounting methods that differentiate contract types based on the contract number being within a pre-defined range of numbers. To this end, the stock provider may configure the system to allocate pre-defined ranges of contract numbers within existing standard category number ranges, such as those assigned by the International Air Transport Association (IATA). These predefined ranges may be indexed by different combinations of issuance parameters. This feature may allow, for example, different contract number ranges to be allocated for domestic and international air tickets issued for a particular airline in a particular country. Embodiments of the invention may thereby enable stock providers to define contract and/or ticket subcategories having issuance context parameters that satisfy the specific requirements of the stock provider in question. These contract subcategories may be recognized by computing systems based solely on the range of numbers from with the contract issued, thereby reducing the need for database queries or other processing steps to determine the issuance parameters of the contract in question.

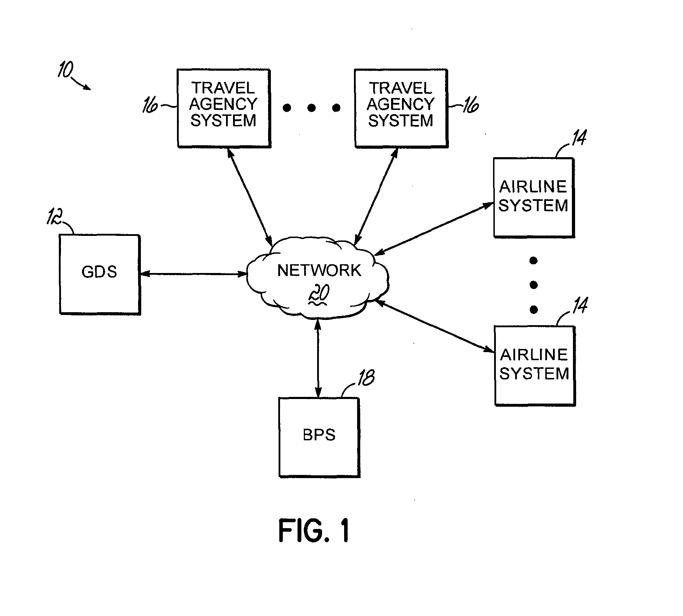

Referring now to FIG. 1, an operating environment 10 in accordance with an embodiment of the invention may include a Global Distribution System (GDS) 12, one or more airline systems 14, one or more travel agency systems 16, and a Billing and Settlement Plan (BSP) system 18 in communication via a network 20. The airline systems 14 may each include a Computer Reservation System (CRS) for the respective airline that enables the GDS 12, the travel agency systems 16 and/or BSP system 18 to reserve and pay for airline tickets and other travel products, such as service upgrades. The network 20 may include one or more private and/or public networks (e.g., the Internet) that enable the exchange of data between the systems.

The GDS 12 may be configured to facilitate communication between the airline system 14 and the travel agency system 16 by enabling travel agents to book reservations on the airline system 14 via the GDS 12. To this end, the GDS 12 may maintain links with the airline systems 14 via the network 20. These links may allow the GDS 12 to route reservation requests from the travel agency systems 16 to the airline systems 14. The travel agency systems 16 may thereby book flights on multiple airlines via a single connection to the GDS 12.

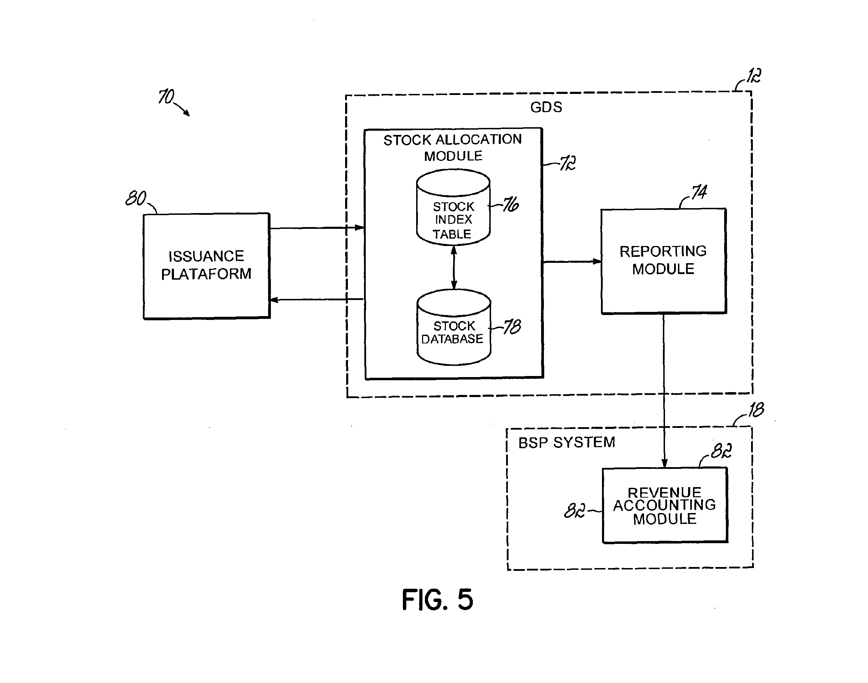

The BSP system 18 may function as an intermediary between the airline and travel agency systems 14, 16. To this end, the BSP system 18 may include a revenue accounting module 82 (FIG. 5) that manages the flow of data and funds between the airline systems 14 and the travel agency systems 16. The BSP system 18 may thereby provide a single point of connection for both the airline systems 14 and travel agency systems 16 so that all billing information passes through the BSP system 18. There may be one BSP responsible for handling all billing and settlement for a particular country or a group of countries. The ticketing process may include the travel agency reporting the sale of the ticket to the corresponding BSP in the name of the airline. In the United States, the Airline Reporting Corporation (ARC) normally provides this service. In any case, the BSP may act as a Business Process Outsourcer (BPO) that provides a clearing house which settles accounts between the travel agency, the transporting airline, the validating airline, or any other party to the transaction. The appropriate airline may thereby collect a fare via the BSP for providing the airline seat. The BSP may also issue tickets to travelers, thereby acting as a stock provider.

An airline ticket purchased through one of the airline systems 14, travel agency systems 16, and/or BSP system 18 may involve booking, pricing, and ticketing the flight. Booking the flight may include checking an airline inventory for availability of the flight. This check may include sending a booking request from the validating system 14, 16, 18 to the GDS 12, which may in turn query an airline system 14 for flight availability. If a seat is available for the requested flight, the flight may be booked and the transporting airline inventory decreased to reflect the booking. As part of the booking process, contract number may be issued and assigned to the ticket to provide a number that uniquely identifies the transaction.

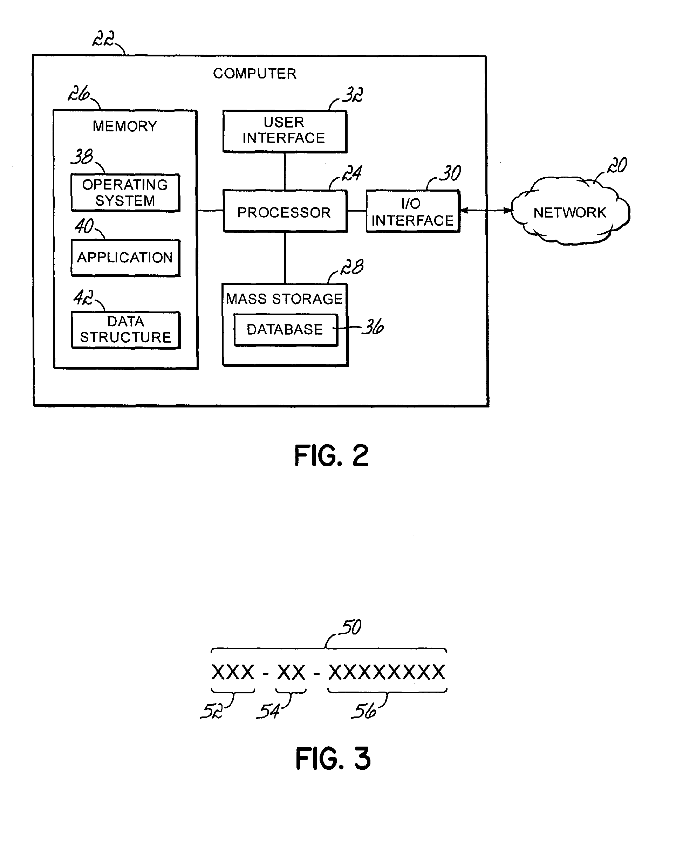

Referring now to FIG. 2, the GDS 12, airline systems 14, travel agency systems 16, and BSP system 18 of operating environment 10 may be implemented on one or more computer devices or systems, such as exemplary computer system 22. The computer system 22 may include a processor 24, a memory 26, a mass storage memory device 28, an input/output (I/O) interface 30, and a user interface 32.

The processor 24 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 26. The memory 26 may include a single memory device or a plurality of memory devices including but not limited to read-only memory (ROM), random access memory (RAM), volatile memory, non-volatile memory, static random access memory (SRAM), dynamic random access memory (DRAM), flash memory, cache memory, or any other device capable of storing information. The mass storage memory device 28 may include data storage devices such as a hard drive, optical drive, tape drive, non-volatile solid state device, or any other device capable of storing information. A database 36 may reside on the mass storage memory device 28, and may be used to collect and organize data used by the various systems and modules described herein.

Processor 24 may operate under the control of an operating system 38 that resides in memory 26. The operating system 38 may manage computer resources so that computer program code embodied as one or more computer software applications, such as application 40 residing in memory 26 may have instructions executed by the processor 24. In an alternative embodiment, the processor 24 may execute the applications 40 directly, in which case the operating system 38 may be omitted. One or more data structures 42 may also reside in memory 26, and may be used by the processor 24, operating system 38, and/or application 40 to store or manipulate data.

The I/O interface 30 may provide a machine interface that operatively couples the processor 24 to other devices and systems, such as the network 20. The application 40 may thereby work cooperatively with the network 20 by communicating via the I/O interface 30 to provide the various features, functions, and/or modules comprising embodiments of the invention. The application 40 may also have program code that is executed by one or more external resources (not shown), or otherwise rely on functions and/or signals provided by other system or network components external to the computer system 22. Indeed, given the nearly endless hardware and software configurations possible, persons having ordinary skill in the art will understand that embodiments of the invention may include applications that are located externally to the computer system 22, distributed among multiple computers or other external resources, or provided by computing resources (hardware and software) that are provided as a service over the network 20, such as a cloud computing service.

The user interface 32 may be operatively coupled to the processor 24 of computer system 22 in a known manner to allow a user to interact directly with the computer system 22. The user interface 32 may include video and/or alphanumeric displays, a touch screen, a speaker, and any other suitable audio, visual, and/or tactile indicators capable of providing information to the user. The user interface 32 may also include input devices and controls such as an alphanumeric keyboard, a pointing device, keypads, pushbuttons, control knobs, microphones, etc., capable of accepting commands or input from the user and transmitting the entered input to the processor 24.

Referring now to FIG. 3, a contract number 50 may comprise a code that includes a stock provider code 52, a form code 54, and a serial number 56. The code may comprise any number of alphabetic characters, any number of numeric characters, or a combination of alphabetic and numeric characters. In a representative embodiment specific to the airline industry, the contract number 50 may be a 13-digit code including a 3-digit stock provider code 52 (also referred to as an airline code), a 2- or 3-digit form code 54, and a 7- or 8-digit serial number 56. The form code 54 may be one of a plurality of form codes 54 defined by the IATA in which each form code 54 corresponds to a standard category of issuance contexts for the contract in question.

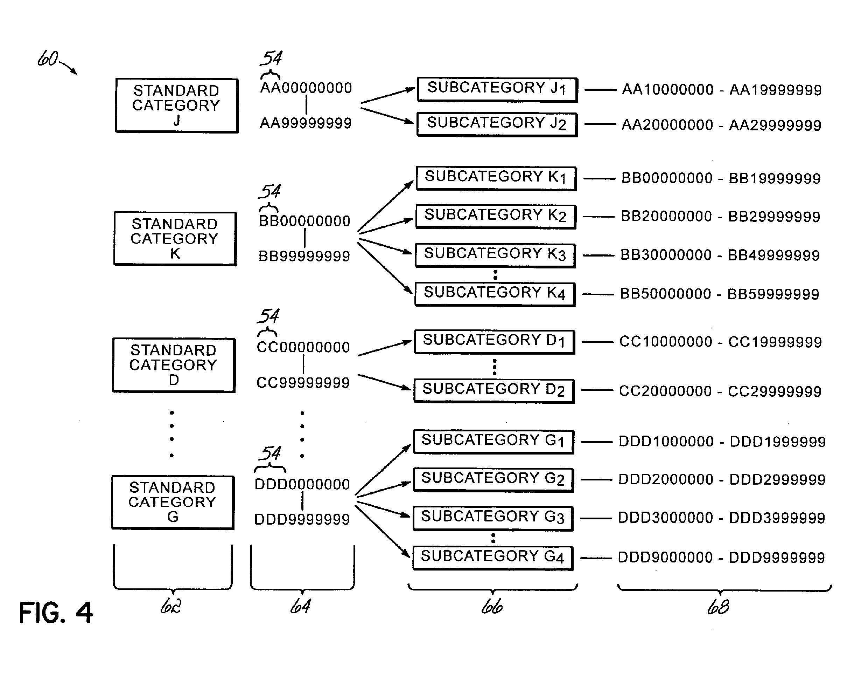

FIG. 4 depicts an exemplary set 60 of contract numbers 50 that may be associated with a specific stock provider. The set 60 of contract numbers 50 may include a plurality of standard categories 62. Each standard category 62 may be associated with a number range 64 defined by a corresponding form code 54. In accordance with embodiments of the invention, one or more of the standard categories 62 may be further divided into a plurality of subcategories 66 each associated with a corresponding subcategory number range 68. By way of example, the form code "AA" corresponding to standard category J may be a number (e.g., 24) that defines an issuance context including an a parameter indicating the contract is for an electronic ticket or "e-ticket". The issuance context may include additional parameters indicating the contract is for a ticket issued electronically by the airline defined by the stock provider code 52. Similarly, form code BB corresponding to standard category K may be a number (e.g., 22) that defines the issuance context of the contract as including parameters indicating the contract is for a ticket issued electronically by a travel agency. Form code CC corresponding to standard category D may be a number (e.g., 82) that defines the issuance context of the contract as including parameters indicating the contract is for an Electronic Miscellaneous Document (EMD) issued by the airline. Form code DDD may be a number (e.g., 457) corresponding to standard category G that defines the issuance context of the contract as including parameters indicating the contract is for an EMD issued by the travel agency. Other standard categories defined by the IATA may include, but are not limited to category H, which indicates the contract is in the form of a paper ticket; category N, which indicates the contract is for a Miscellaneous Charges Order (MCO); and category X, which indicates the contract is for excess baggage (XSB).

The subcategories 66 may be defined to specify additional issuance context parameters within the standard categories 62. The subcategories may be defined by the stock provider (e.g., the airline), so that the subcategories 66 are specific to the stock provider defined by the stock provider code 52. These subcategories 66 may define additional issuance context parameters, such as a point of issuance (e.g., France), the type of contract (e.g., ticket, EMD, MCO, XSB, etc.), the contract media (e.g., electronic or paper), the user type (e.g., travel agency, Airline Ticketing Office, or Central Ticketing Office), the stock provider type (e.g., airline, rail carrier), the stock provider identity (e.g., Air France), and/or any other suitable issuance context parameter. For example, subcategory J₁ may include contracts with an issuance context including parameters indicating the contract is for a ticket issued electronically by the airline with a point of sale in France. In contrast, subcategory J₂ may include contracts with an issuance context including parameters indicating the contract is for a ticket issued electronically by the airline that includes only segments provided by the validating carrier.

Thus, the airline system 14, BSP system 18, or other suitable system may be able to determine additional characteristics of the travel product beyond that conveyed by form code 54 based solely on the subcategory number range of the contract number. The subcategory number range feature may thereby allow ticket processing systems to determine additional travel product characteristics without the need for a database query. Embodiments of the invention may thereby reduce processing time and resource requirements as compared to conventional systems having contract number sets 60 that lack subcategories 66. By defining subcategories 66 within the standard categories 62, the subcategory number ranges 68 may provide stock providers with a tool for allocating contract numbers at a lower granularity than would be possible with the standard categories 62 alone. The subcategory number range feature may thereby allow stock providers to customize the set 60 of contract numbers 50. This customization may convey issuance context parameters that address the specific needs of the stock provider, while maintaining compatibility with conventional ticket processing systems that lack this feature.

Embodiments of invention may thereby provide a flexible system that enables stock providers to select issuance contexts parameters for differentiation within the standard categories. Subcategories 66 may be defined for issuance contexts specific to the stock provider in question. This feature may allow the stock provider to allocate a specific number range for transactions corresponding to a specific issuance context without concern for how other stock providers are formatting their contract numbers. Because the subcategories 66 are defined independently from the stock provider code 52, the same subcategory number range may be allocated to a different issuance context by another stock provider. By way of example, an EMD issued by airline having a stock provider code of '132' may define contract numbers in a number range of 132-82-13000000 to 132-82-13999999 as identifying a contract for an excess baggage service. At the same time, another airline having a stock provider code of 456 could use this same subcategory number range (82-13000000 to 82-13999999) to identify contracts for an EMD that adds a chargeable seat feature to a ticket.

Referring now to FIG. 5, a contract number allocation system 70 may include a stock allocation module 72 and a reporting module 74. The stock allocation module 72 and reporting module 74 may be provided by the GDS 12 as shown, or may be provided independently of the GDS 12. In any case, the stock allocation module 72 may be in communication with an issuance platform 80 and the reporting module 74. The stock allocation module 72 may include a stock index table 76 and a stock database 78 that cooperatively operate to provide contract numbers matching the issuance context of the contract for which a contract number is being requested. The issuance platform 80 may be part of the airline system 14, travel agency system 16, BPS system 18, or any other system that issues contracts for travel products. The reporting module 74 may be in communication with the revenue accounting module 82, which may be provided by the BSP system 18. The reporting module 74 may be configured to receive contract numbers and issuance context data from the stock allocation module 72. The reporting module 74 may configure this data into a suitable format and provide the data to the revenue accounting module 82. In this way, the BSP system 18 may be able to identify the contract issued by the issuance platform 80 based on the assigned contract number provided by the stock allocation module 72.

The stock allocation module 72 may manage a plurality of contract numbers for each of a plurality of stock providers. To this end, the stock allocation module 72 may maintain the stock database 78 of a given stock provider (e.g., airline) by adding, deleting, or displaying the different contract numbers corresponding to the different types of documents that may be issued by the stock provider. The stock allocation module 72 may thereby organize the set 60 of contract numbers 50 of a given stock provider according to a list of parameters comprising the issuance context of the contract in question.

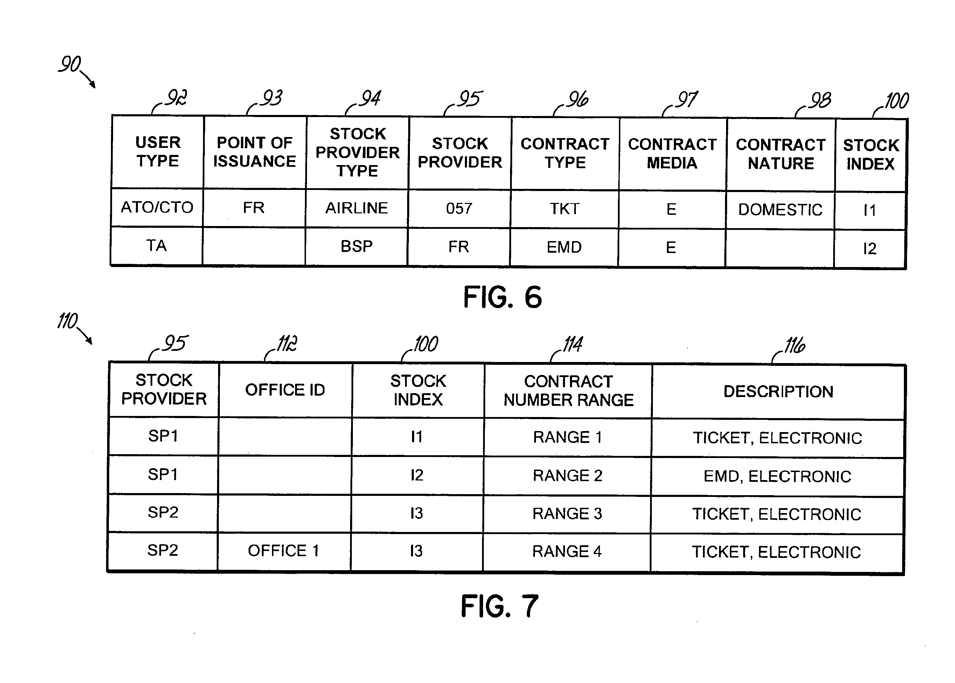

Referring now to FIG. 6, a table 90 depicts an exemplary portion of the stock index table 76 in accordance with an embodiment of the invention. The table 90 may include a column for each of a plurality of parameters that collectively define an issuance context for each of a plurality of stock issuance context subcategories. Thus, each stock in the table 90 may have an issuance context that is defined by a row of the table 90. The parameters defining the issuance contexts may include, but are not limited to: a user type parameter 92, a point of issuance parameter 93, a stock provider type parameter 94, a stock provider parameter 95, a contract type parameter 96, contract media parameter 97, and contract nature parameter 98. The user type parameter 92 may define the entity performing the transaction. This entity may be an Airline Ticketing Office or Central Ticketing Office, a travel agent, or any other seller of travel products. The point of issuance parameter 93 may define the location of the point of sale. That is, the point of issuance may be where the system user performed the transaction that resulted in issuance of the contract. The stock provider type parameter 94 may define the type of entity that issued or distributed the contract. Exemplary stock provider types include, but are not limited to: an airline, a BSP, a rail carrier, or the Airlines Reporting Corporation. The stock provider parameter 95 may identify the specific organization that distributes the contract. The contract type parameter 96 may identify whether the transaction is for a ticket, or some other product such as an EMD, MCO, or XSB. The contract media parameter 97 may identify if the contract is in an electronic, paper, or virtual form. The contract nature parameter 98 may provide an identifier that allows the stock index table 76 to identify the kind of contract being handled by the issuance platform 80, e.g., a contract for a domestic or an international flight. A stock index 100 may define the issuance context as including a particular combination of the parameters 92-98. Thus, the issuance context of a contract in the stock database 78 may be identified by the stock index 100.

The stock index table 76 may allow defining and indexing of stock provider contracts based on the issuance context parameters 92-98. The stock index table 76 thereby enables contract definitions to be decoupled from contract number range storage and handling. By way of example, one stock index 100 may be defined for each existing 7-uplet that defines an issuance context for a contract in the air travel industry. The resulting one-to-one relationship between each 7-uplet and its corresponding stock index 100 in the stock index table 76 may define a separate subcategory 66 of issuance contexts. In an embodiment of the invention, the stock index table 76 may be managed so that contract numbers conform with Automated Baggage Rules (ABR) issued by the IATA.

Referring now to FIG. 7, a table 110 depicts an exemplary portion of the stock database 78 in accordance with an embodiment of the invention. The table 110 may include columns for the stock provider parameter 95, the stock index 100, an office ID parameter 112, a contract number range 114, and a contract description field 116. Each column entry in the contract number range 114 may define a range of contract numbers. A contract number may be assigned from this range to a contract having the issuance context corresponding to the stock index 100. Although the tables 90 and 110 of FIGS. 6 and 7 are depicted as having a specific number of rows and columns, and each of these rows and columns is further depicted as hosting a particular issuance context, parameter, contract number range, etc., embodiments of the invention are not limited to the illustrated table configurations. Thus, a person having ordinary skill in the art would understand that embodiments of the invention may include stock index tables 76 and stock databases 78 having different numbers of rows, columns, parameters, and/or number ranges.

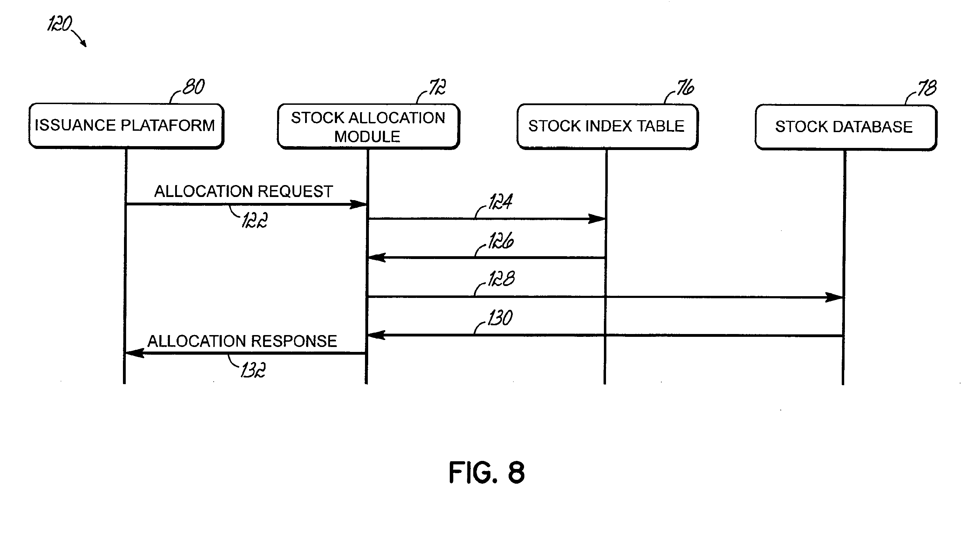

Referring now to FIG. 8, a flow diagram depicts an exemplary process 120 for allocating a contract number from the stock database 78. In response to the traveler indicating that they wish to execute a transaction (e.g., book a flight), the issuance platform 80 may transmit an allocation request 122 to the stock allocation module 72. In response to receiving the allocation request 122, the stock allocation module 72 may transmit a query 124 to the stock index table 76. The query 124 may include the context issuance parameters for the transaction in question. In response to receiving the query 124, the stock index table 76 may attempt to identify a stock index 100 that matches the issuance context of the transaction. In response to the stock index table 76 identifying a stock index 100 having parameters that match the issuance context of the transaction, the stock index table 76 may transmit a response 126 to the stock allocation module 72 that includes the stock index 100.

In response to receiving the response 126, the stock allocation module 72 may transmit a query 128 to the stock database 78 requesting an available contract number from a contract number range 114 matching the stock index 100. In response to receiving the query 128, the stock database 78 may identify the next available contract number from the contract number range 114 corresponding to the stock index 100 and/or Office ID 112. The stock database may then mark the identified contract number as allocated, and transmit a response 130 to the stock allocation module 72 that includes the identified contract number. In response to receiving the contract number from the stock database 78, the stock allocation module 72 may transmit an allocation response 132 to the issuance platform 80. The issuance platform 80 may then complete the transaction by issuing a contract having the received contract number.

If the stock index table 76 cannot identify a stock index 100 that has parameters that provide an exact match to the issuance context of the pending transaction, the stock allocation module 72 may determine a stock index 100 that provides a best match. The stock allocation module 72 may determine which stock index 100 is the best match based on the number of matching parameters and on relative weights assigned to each of the matching parameters. In an embodiment of the invention, the relative weight of each parameter in the stock index table 76 may be assigned a value based on scale where each weight is equal to a power of two. That is, each parameter may be associated with a digit of a binary number, with the weight of the parameter corresponding to the numerical value of the digit. Each parameter may thereby be provided with a unique power of two, with the most significant parameters having the largest weight.

To determine the best matching stock index 100, the stock allocation module 72 may select the stock index 100 having the largest number of parameters that match the issuance context parameters of the pending transaction. If more than one stock index 100 has this number of matching parameters, the stock allocation module 72 may calculate a sum of the weights of the matching parameters for the tied stock indexes 100. The stock index 100 having the largest sum may then be selected as being the best matching stock index 100 and returned to the issuance platform 80.

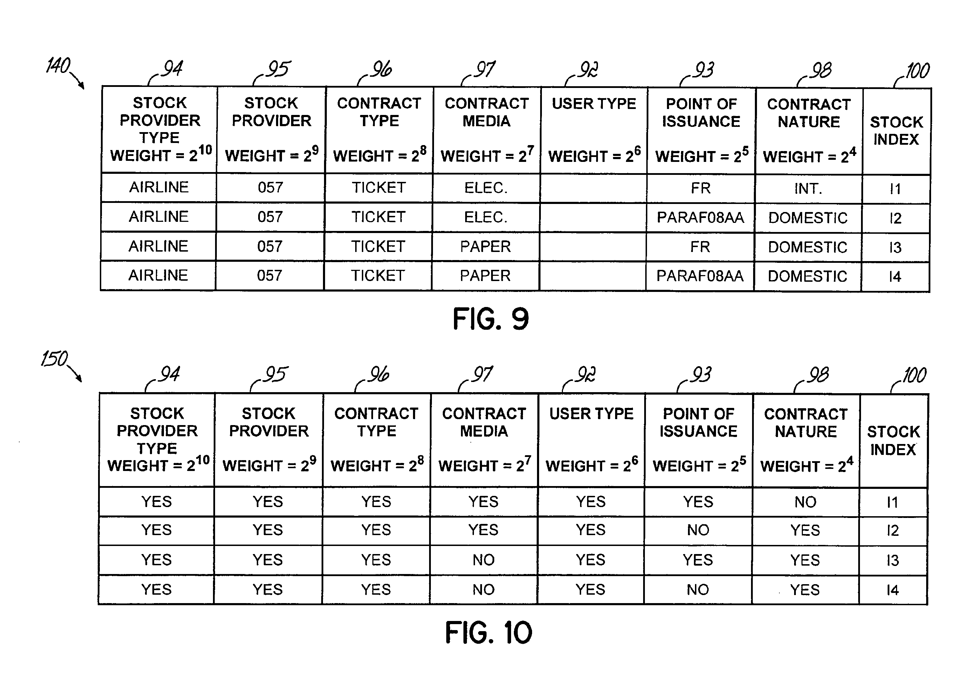

Referring now to FIGS. 9 and 10, an exemplary stock index table 140 is presented that defines the parameter weight for each of seven parameters as follows: (1) airline parameter weight = 2¹⁰; (2) stock provider parameter weight = 2⁹; (3) contract type parameter weight = 2⁸; (4) contract media parameter weight = 2⁷; (5) user type parameter weight = 2⁶; (6) point of issuance parameter weight = 2⁵; and (7) contract nature parameter weight = 2⁴. An exemplary allocation request 122 may include the following context issuance parameters: (1) stock provider type = airline; (2) stock provider = 057; (3) contract type = ticket; (4) contract media = electronic; (5) user type = none; (6) point of issuance = FR; and (7) contract nature = domestic. Because the exemplary allocation request 122 does not exactly match any of the stock indexes 100 in table 140, the stock allocation module 72 may determine a best match for the request.

A weighted match for each of the stock indexes for the exemplary allocation request 122 is illustrated by the table 150 depicted in FIG. 10. To determine the best match, the stock allocation module 72 first determines how many parameters of each stock index 100 match a parameter of the issuance context for the pending transaction. In the present example, stock indexes I1,I2 and I3 each have six matching parameters, and stock index I4 has five matching parameters. The stock allocation module 72 may then calculate the weighted sum for stock indexes I1-I3, which produces the following weighted sums: I1 = 11111100000 (BIN) = 2016 (DEC); I2 = 11111010000 (BIN) = 2000 (DEC); and I3 = 11101110000 (BIN) = 1904 (DEC). Thus, in this exemplary case, the best match to the received query would be stock index I1, which would be returned to the issuance platform 80.

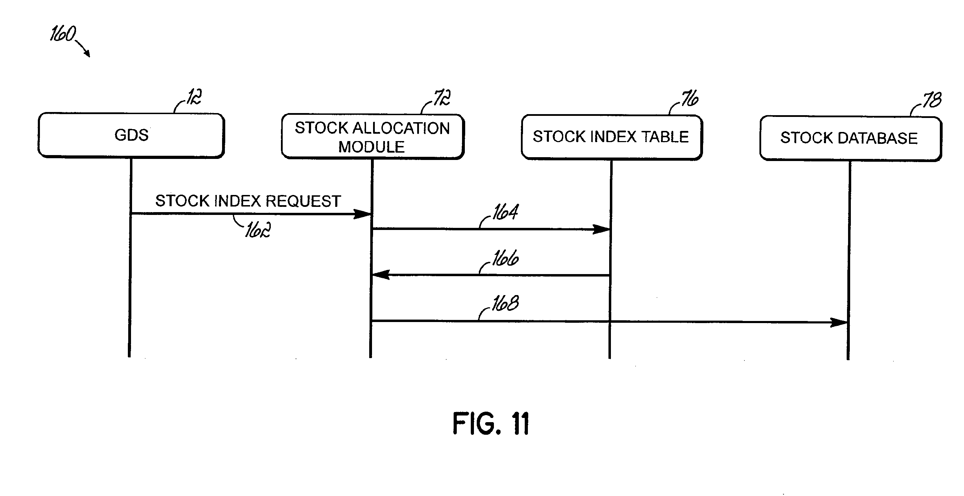

Referring now to FIG. 11, a flow diagram depicts an exemplary process 160 for defining a new stock index 100 in the stock index table 76. Defining the new stock index 100 may be initiated by entering a system command into the GDS 12, such as through a user terminal (not shown). The command may contain all the issuance context parameters associated with the transaction for which the stock index 100 is desired, and a corresponding number range to be associated with the stock index. An example of a cryptic command that may create this association is:
>DSLA/CT-TKT/CM-E/SPT-AIR/SP-176/1000000000-1099999999
The above command may generate a stock index request 162 requesting creation of the stock index 100 having a contract type = ticket, a contract media = electronic, a stock provider type = airline, and a stock provider = '176'. The stock index 100 so defined may be further associated with the number range 1000000000-1099999999.

In response to receiving the stock index request 162, the stock allocation module 72 may send a request 164 to the stock index table 76. In response to receiving the request 164, the stock index table 76 may determine if the issuance context parameters in the request 164 exactly match the parameters of an existing stock index 100. If a stock index 100 that exactly matches the entered issuance context parameters is already defined in the stock index table 76, the stock allocation module 72 may retrieve the existing stock index 100. If a stock index 100 exactly matching the entered issuance context parameters is not already defined in the stock index table 76, the stock allocation module 72 may add a new stock index to the table and associate this new stock index 100 with the issuance context parameters in the request 164. The stock index table 76 may then provide the stock index 100 (previously existing or newly defined, as the case may be) to the stock allocation module 72 in a response 166.

In response to receiving the response 166, the stock allocation module 72 may transmit a command 168 that includes the stock range (e.g., 1000000000-1099999999) and the associated stock index 100 to the stock database 78. In response to receiving the command 168, the stock database 78 may add a table entry associating the entered number range (e.g., 1000000000-1099999999) with the stock index 100.

The program code embodying any of the embodiments of the invention described herein is capable of being individually or collectively distributed as a program product in a variety of different forms. In particular, the program code may be distributed using a computer readable media, which may include computer readable storage media and communication media. Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures, or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

The methods described herein can be implemented by computer program instructions supplied to the processor of any type of computer to produce a machine with a processor that executes the instructions to implement the functions/acts specified herein. These computer program instructions may also be stored in a computer readable medium that can direct a computer to function in a particular manner. To that end, the computer program instructions may be loaded onto a computer to cause the performance of a series of operational steps and thereby produce a computer implemented process such that the executed instructions provide processes for implementing the functions/acts specified herein.

In addition, program code described herein may be identified based upon the application or software component within which the program code is implemented in a specific embodiment of the invention. However, it should be appreciated that any particular program nomenclature that follows is used merely for convenience, and thus the invention should not be limited to use solely in any specific application identified and/or implied by such nomenclature. It should be further appreciated that the various features, applications, and devices disclosed herein may also be used alone or in any combination. Moreover, given the typically endless number of manners in which computer programs may be organized into routines, procedures, methods, modules, objects, and the like, as well as the various manners in which program functionality may be allocated among various software layers that are resident within a typical computing system (e.g., operating systems, libraries, APIs, applications, applets, etc.), and/or across one or more hardware platforms, it should be appreciated that the invention is not limited to the specific organization and allocation of program functionality described herein.

While embodiments of the invention have been illustrated by a description of various examples, and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described. Accordingly, departures may be made from such details without departing from the spirit or scope of applicant's general inventive concept.

## Claims

1. A method of organizing contract numbers in a database, the database including a plurality of sets of the contract numbers, each set of contract numbers corresponding to one of a plurality of stock providers and including a plurality of standard category number ranges, the method comprising:
for a first set of contract numbers corresponding to a first stock provider, defining a first subcategory number range within a first standard category number range and corresponding to a first issuance context; and
for the first set of contract numbers, defining a second subcategory number range within the first standard category number range and corresponding to a second issuance context,
wherein a first contract issued for the first stock provider and having a first contract number including a first number from the first subcategory number range is identifiable as having the first issuance context based on the first contract number, and a second contract issued for the first stock provider and having a second contract number including a second number from the second subcategory number range is identifiable as having the second issuance context based on the second contract number.

2. The method of claim 1 further comprising:
for a second set of contract numbers corresponding to a second stock provider, defining a third subcategory number range within the first standard category number range and corresponding to a third issuance context different from either of the first and second issuance contexts,
wherein a third contract issued for the second stock provider and having a third contract number including a third number from the third subcategory number range is identifiable as having the third issuance context based on the third contract number.

3. The method of claim 1 or 2 wherein the first issuance context is defined by parameters selected from the group consisting of a user type, a contract type, a contract media, a contract nature, a stock provider type, a stock provider identity, and a point of issuance.

4. An apparatus comprising:
a processor; and
a memory including instructions that, when executed by the processor, cause the apparatus to:
for a first set of contract numbers corresponding to a first stock provider, define a first subcategory number range within a first standard category number range and corresponding to a first issuance context; and
for the first set of contract numbers, define a second subcategory number range within the first standard category number range and corresponding to a second issuance context,
wherein a first contract issued for the first stock provider and having a first contract number including a first number from the first subcategory number range is identifiable as having the first issuance context based on the first contract number, and a second contract issued for the first stock provider and having a second contract number including a second number from the second subcategory number range is identifiable as having the second issuance context based on the second contract number.

5. A computer program product comprising:
a non-transitory computer readable storage medium; and
instructions stored on the non-transitory computer readable storage medium that, when executed by a processor, cause the processor to:
for a first set of contract numbers corresponding to a first stock provider, define a first subcategory number range within a first standard category number range and corresponding to a first issuance context; and
for the first set of contract numbers, define a second subcategory number range within the first standard category number range and corresponding to a second issuance context,
wherein a first contract issued for the first stock provider and having a first contract number including a first number from the first subcategory number range is identifiable as having the first issuance context based on the first contract number, and a second contract issued for the first stock provider and having a second contract number including a second number from the second subcategory number range is identifiable as having the second issuance context based on the second contract number.

6. A method of assigning contract numbers from a database containing contract numbers, the method comprising:
receiving, at a computer, a first allocation request from an issuance platform, the first allocation request being for a first contract issued for a first stock provider and including a first issuance context;
determining, at the computer, a first stock index that matches the first issuance context;
defining a first contract number that includes a first number from a first subcategory number range associated with the first stock index in the database; and
transmitting the first contract number to the issuance platform,
wherein the first subcategory number range defines a portion of a first standard category number range stored in the database, the first standard category number range includes the first subcategory number range and a second subcategory number range, each of the first and second subcategory number ranges is associated with the first stock provider, and the first standard category number range is one of a plurality of standard category number ranges stored in the database.

7. The method of claim 6 further comprising:
receiving, at the computer, a second allocation request from the issuance platform, the second allocation request being for a second contract issued for a second stock provider and including a second issuance context;
determining, at the computer, a second stock index that matches the second issuance context;
defining a second contract number that includes a second number from a third subcategory number range associated with the second stock index in the database; and
transmitting the second contract number to the issuance platform, wherein
the third subcategory number range defines a second portion of the first standard category number range stored in the database and associated with the second stock provider.

8. The method of claim 2 or 7 wherein the third subcategory number range overlaps at least one of the first and second subcategory number ranges.

9. The method of any one of claims 1 to 3, 6 to 8 wherein the first stock index is associated with the first subcategory number range in a stock index table, and a second stock index is associated with the second subcategory number range in the stock index table.

10. The method of any one of claims 1 to 3, 6 to 9 further comprising defining the first contract number by appending an airline code corresponding to the first stock provider onto the first number from the first subcategory number range.

11. The method of any one of claims 6 to 10 wherein the first issuance context is defined by parameters selected from the group consisting of a user type, a contract type, a contract media, a contract nature, a stock provider type, a stock provider identity, and a contract point of issuance.

12. The method of any one of of claims 6 to 11 wherein the first stock index is one of a plurality of stock indexes, and determining the first stock index that matches the first issuance context comprises:
determining, for each stock index of the plurality of stock indexes, a number of parameters of the first issuance context that match a corresponding parameter of the stock index;
selecting the stock index with the largest number of parameters that match as a matching stock index; and
in response to more than one stock index having the same number of matching parameters, selecting the stock index having a highest weighted sum of matching parameters as the matching stock index.

13. The method of claim 12 wherein each parameter is weighted based on a power of two.

14. An apparatus comprising:
a processor; and
a memory including instructions that, when executed by the processor, cause the apparatus to:
receive a first allocation request from an issuance platform, the first allocation request being for a first contract issued for a first stock provider and including a first issuance context;
determine a first stock index that matches the first issuance context;
define a first contract number that includes a first number from a first subcategory number range associated with the first stock index in a database; and
transmit the first contract number to the issuance platform,
wherein the first subcategory number range defines a portion of a first standard category number range stored in the database, the first standard category number range includes the first subcategory number range and a second subcategory number range, each of the first and second subcategory number ranges is associated with the first stock provider, and the first standard category number range is one of a plurality of standard category number ranges stored in the database.

15. A computer program product comprising:
a non-transitory computer readable storage medium; and
instructions stored on the non-transitory computer readable storage medium that, when executed by a processor, cause the processor to:
receive a first allocation request from an issuance platform, the first allocation request being for a first contract issued for a first stock provider and including a first issuance context;
determine a first stock index that matches the first issuance context;
define a first contract number that includes a first number from a first subcategory number range associated with the first stock index in a database; and
transmit the first contract number to the issuance platform,
wherein the first subcategory number range defines a portion of a first standard category number range stored in the database, the first standard category number range includes the first subcategory number range and a second subcategory number range, each of the first and second subcategory number ranges is associated with the first stock provider, and the first standard category number range is one of a plurality of standard category number ranges stored in the database.
